(19) Europäisches Patentamt
European Patent Office
Office européen des brevets

(11) **EP 2 190 055 A1**

(12) **EUROPEAN PATENT APPLICATION**

(43) Date of publication:
**26.05.2010 Bulletin 2010/21**

(51) Int Cl.:
***H01M 10/48*** *(2006.01)*

(21) Application number: **09172459.1**

(22) Date of filing: **07.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.10.2008 JP 2008264042**

(71) Applicant: **Kabushiki Kaisha Toshiba
Tokyo 105-8001 (JP)**

(72) Inventors:
• **Kuwano, Yuuki
Tokyo 105-8001 (JP)**

• **Morikawa, Ryuichi
Tokyo 105-8001 (JP)**
• **Mizutani, Mami
Tokyo 105-8001 (JP)**
• **Monden, Yukitaka
Tokyo 105-8001 (JP)**
• **Kubota, Masayuki
Tokyo 105-8001 (JP)**

(74) Representative: **Garkisch, Marcus
Patentanwälte
Henkel, Feiler & Hänzel
Maximiliansplatz 21
80333 München (DE)**

(54) **Battery device comprising a voltage detection and control circuit**

(57) A battery device includes electric cells connected in series, resistors connected to respective electrodes of the electric cells, discharge switches for discharging voltages between the respective electrodes of each of the battery cells via the resistors, and a voltage detection and control circuit. When a detection voltage when the discharge switch is closed and not disconnected is defined as $V$, a detection voltage when a discharge switch is closed and disconnected is defined as $V_s$, and a detection voltage when a discharge switch is not closed and not disconnected is defined as $V_E$, the voltage detection and control circuit arranges a relationship between a disconnect determination voltage $V_{SL}$ and a discharge malfunction determination voltage $V_{SH}$ so as to be $V_E > V_{SH} > V > V_{SL} > V_S$. The battery device includes a method of making a malfunction detection signal for determining the battery device as a malfunction when at least one of voltages of the electric cells detected when closing the discharge switch is determined to be the discharge malfunction determination voltage $V_{SH}$ or more, or the disconnect determination voltage $V_{SL}$ or less.

FIG. 1

EP 2 190 055 A1

**Description**

**BACKGROUND OF THE INVENTION**

**1. Field of the Invention**

The present invention relates to a battery device including unit cells (hereinafter referred to as electric cells) connected in series. Specifically, the present invention relates to a battery device capable of detecting a disconnection of voltage detection lines provided in each of the electric cells, a cell balance nonconformity, disconnection points of the voltage detection lines, and an over-charge and over-discharge in each of the electric cells.

**2. Description of the Related Art**

A conventional battery device includes electric cells connected in series, and a voltage measuring function and a cell balance function in each of the electric cells. The voltage measuring function is a function to measure a voltage between terminals in each of the electric cells, and determine that the battery device is conformity" if the measured voltage values are within a predetermined voltage range. Also, the cell balance function is a function to determine charging and discharging conditions of all of the electric cells by use of a cell balance circuit configured to measure a charged voltage and a discharged voltage of each of the electric cells ( Japanese Patent Laid-Open Publication No. 2007-085847).

**SUMMARY OF TEE INVENTION**

However, the above-mentioned conventional battery device merely includes the voltage measuring function and the cell balance function, and merely is carried out to determine a criterion of a nonconformity of a voltage between terminals in each of the electric cells or charging and discharging conditions of all of the battery cells. Such a battery device did not have a method for specifying nonconformity causes, such as determining disconnection points of the voltage detection lines and detecting an over-charge and over-discharge in each of the electric cells. Thus, quality enhancements in such a battery device could not be achieved.

The present invention has been made in consideration for the above-mentioned problem. It is an object of the present invention to provide a battery device including electric cells connected in series, the battery device being capable of detecting a disconnection of voltage detection lines provided in each of the electric cells, a cell balance nonconformity, and an over-charge and over-discharge in each of the electric cells so as to determine the battery device itself as a malfunction when at least one electric cell is determined as a malfunction as a result of the detection.

To achieve the above-described object, a first aspect of the present invention provides a battery device comprising: electric cells connected in series; resistors connected to respective electrodes of the electric cells; discharge circuits for discharging voltages between the respective electrodes of the electric cells via the resistors; and a detection and control circuit for detecting the voltages between the respective electrodes of the electric cells via the resistors, and performing discharge control by closing a set discharge circuit of the discharge circuits. When a detection voltage obtained when the set discharge circuit is closed and a corresponding electric cell is in a normal condition is defined as $V$, a detection voltage obtained when the set discharge circuit is closed and the set discharge circuit is in a disconnect state is defined as $V_S$, a detection voltage obtained when the set discharge circuit is not closed and the set discharge circuit is not in a disconnect state is defined as $V_E$, a disconnect determination voltage arranged between the detection voltage $V$ in the normal condition and the detection voltage $V_S$ in the disconnect state, and defined as a criterion voltage to determine the set discharge circuit to be in a disconnect state with respect to a voltage detected when the set discharge circuit is closed is defined as $V_{SL}$, and a discharge malfunction determination voltage arranged between the detection voltage $V$ in the normal condition and the detection voltage $V_E$ with the certain discharge circuit not closed, and defined as a criterion voltage to determine the set discharge circuit not to be in a disconnect state with respect to a voltage detected when the set discharge circuit is not closed is defined as $V_{SH}$, the detection and control circuit arranges a relationship between the voltages $V_{SL}$ and $V_{SH}$ so as to be

$$V_E > V_{SH} > V > V_{SL} > V_S$$

with respect to the respective voltages $V$, $V_S$ and $V_E$. A corresponding electric cell is determined as a malfunction when at least one of the voltages detected in the detection and control circuit with the discharge circuits closed is determined to be the discharge malfunction determination voltage $V_{SH}$ or more, or the disconnect determination voltage $V_{SL}$ or less.

According to the battery device of the first aspect of the present invention, it is possible to provide the battery device capable of determining the battery device itself as a malfunction when at least one of the voltages between the respective electrodes in all of the electric cells is determined to be the discharge malfunction determination voltage $V_{SH}$ or more, or the disconnection determination voltage $V_{SL}$ or less. Thus, the quality of the battery device is maintained, thereby obtaining high reliability.

In addition, to achieve the above-described object, a second aspect of the present invention provides a method of making a malfunction detection signal for the battery device according to claim 1, the method comprising: a first step of determining whether voltages between the both electrodes of the respective electric cells when not closing the discharge circuits meet a predetermined voltage so as to determine a criterion whether all of the electric cells are conformity; a second step of detecting and recording voltages of all of the electric cells with the discharge circuits closed when the voltages between the respective electrodes of all of the electric cells are conformity as a result of a determination in the first step; a third step of determining whether at least one of the voltages detected in the second step is the discharge malfunction determination voltage $V_{SH}$ or more; a fourth step of determining a corresponding electric cell to be in a discharge circuit malfunction state when at least one of the voltages is determined to be the discharge malfunction determination voltage $V_{SH}$ or more as a result of a determination in the third step; a fifth step of determining whether at least one voltage is the disconnect determination voltage $V_{SL}$ or less when all of the voltages are determined to be less than the discharge malfunction determination voltage $V_{SH}$ as a result of the determination in the third step; and a sixth step of determining a corresponding discharge circuit to be in a disconnect state when at least one of the voltages detected in the second step is determined to be the disconnect determination voltage $V_{SL}$ or less as a result of a determination in the fifth step. A corresponding electric cell is determined as a malfunction when the at least one of the voltages detected in the second step is determined to be the discharge malfunction determination voltage $V_{SH}$ or more, or the disconnect determination voltage $V_{SL}$ or less.

According to the method of making the malfunction detection signal of the second aspect of the present invention, it is possible to provide the method of detecting a corresponding electric cell as a malfunction, and at the same time, the battery device itself as a malfunction when at least one of the voltages detected when closing the discharge circuits is determined to be the discharge malfunction determination voltage $V_{SH}$ or more, or the disconnection determination voltage $V_{SL}$ or less. Thus, the quality of the battery device is maintained, thereby obtaining high reliability.

According to the aspects of the present invention, it is possible to provide the battery device including the electric cells connected in series, the battery device detecting a disconnection of voltage detection lines provided in each of the electric cells, a cell balance nonconformity, and an over-charge and over-discharge in each electric cell. As a result, it is possible to provide the battery device for determining the battery device itself as a malfunction when at least one electric cell is determined as a malfunction.

## BRIEF DESCRIPTION OF THE DRAWINGS

Fig. 1 is a block diagram of a battery device according to an embodiment of the present invention.
Fig. 2 is a flow chart showing a method of making a malfunction detection signal according to an embodiment of the present invention.

## DETAILED DESCRIPTION OF THE EMBODIMENTS

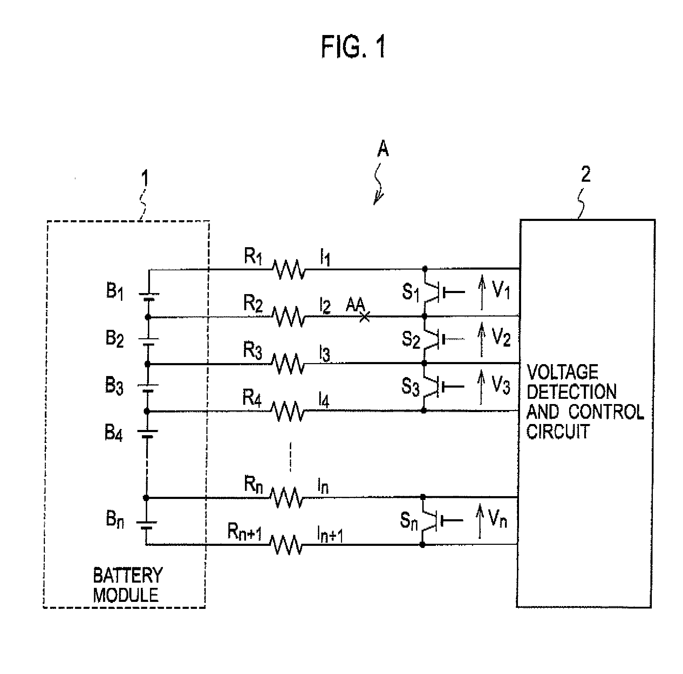

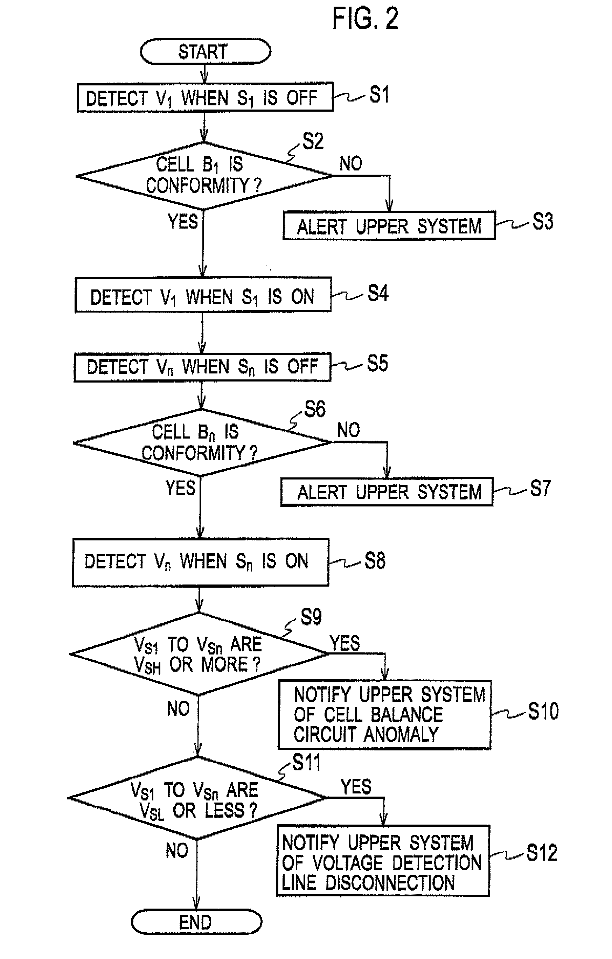

Hereinafter, description will be made below in detail of an embodiment of the present invention with reference to Figs 1 and 2.

A battery device according to the embodiment of the present invention determines the battery device as a defective due to a battery device malfunction when any disconnection of voltage detection lines or cell balance nonconformity is detected in at least one of electric cells composing the battery device, as described later. Even if such a malfunction is not detected, the battery device treats the battery device as a defective due to a malfunction of the battery device when an over-charge or over-discharge is detected in at least one electric cell. Thus, the battery device double-checks all of the electric cells so as to strengthen quality control of the battery device. Accordingly, it is possible to maintain high performance of the battery device for a long period. In addition, it is possible to provide the battery device while achieving high reliability by users.

A battery device A according to the embodiment of the present invention, as shown in Fig. 1, includes electric cells $B_1$, $B_2$, $B_3$, $B_4$, ..., $B_n$ connected in series, resistors $R_1$, $R_2$, $R_3$, ..., $R_n$, $R_{n+1}$ of which each one end is connected to respective terminals of the electric cells $B_1$, $B_2$, $B_3$, $B_4$, ..., $B_n$, voltage detection lines $I_1$, $I_2$, $I_3$, $I_4$, ..., $I_n$, $I_{n+1}$ connected to another end of the respective resistors, a voltage detection and control circuit 2 connected to respective voltage detection lines, and discharge switches $S_1$, $S_2$, $S_3$, ..., $S_n$ connected between the respective adjacent two voltage detection lines

$I_1$-$I_2$, $I_2$-$I_3$, $I_3$-$I_4$, ..., $I_n$-$I_{n+1}$.

For convenience, a battery module 1 including the electric cells $B_1$, $B_2$, ..., $B_n$ connected in series, the resistors $R_1$, $R_2$, ..., $R_n$, the voltage detection lines $I_1$, $I_2$, ..., $I_n$, $I_{n+1}$, the voltage detection and control circuit 2, and the discharge switches $S_1$, $S_2$, ..., $S_n$ are integrally providing.

The discharge switches $S_1$, $S_2$, ..., $S_n$ are electronic switches, for instance. Switching control terminals for a closing and opening control (hereinafter referred to as an "on-off control") of the discharge switches $S_1$, $S_2$, ..., $S_n$ are supplied with switching control signals from the voltage detection and control circuit 2 according to a flow chart (Fig. 2) as described later, thereby performing the on-off control.

Then, the resistor $R_1$, the voltage detection line $I_1$, the discharge switch $S_1$, the voltage detection line $I_2$ and the resistor $R_2$ constitute a cell balance circuit (discharge circuit) of the electric cell $B_1$. Also, the resistor $R_2$, the voltage detection line $I_2$, the discharge switch $S_2$, the voltage detection line $I_3$ and the resistor $R_3$ constitute a cell balance circuit of the electric cell $B_2$. Such a cell balance circuit is provided in the respective electric cells $B_1$, $B_2$, ..., $B_n$. Each cell balance circuit discharges a voltage between both electrodes of the respective electric cells $B_1$, $B_2$, ..., $B_n$ via the resistors $R_1$, $R_2$, ..., $R_n$, $R_{n+1}$.

The voltage detection and control circuit 2 detects voltages between both electrodes (terminals) of the arbitrary number of the electric cells $B_1$, $B_2$, ..., $B_n$ via the resistors $R_1$, $R_2$, ..., $R_n$, $R_{n+1}$. Also, the voltage detection and control circuit 2 performs various processing controls for the electric cells $B_1$, $B_2$, ..., $B_n$ according to the flow chart (Fig. 2) as described later. In this case, it is acceptable to detect odd-numbered electric cells such as the electric cells $B_1$, $B_3$, ... first, followed by detecting even-numbered electric cells such as the electric cells $B_2$, $B_4$, ... and so on.

The following are descriptions of a "disconnect detection of the voltage detection lines" when the voltage detection line $I_2$ is disconnected at an AA point in Fig. 1, for instance. Also, the following are descriptions of a "malfunction detection of the cell balance circuits" when a malfunction is detected in the discharge switch $S_2$ in the cell balance circuit of the electric cell $B_2$, for instance.

When the voltage detection line $I_2$ is not disconnected and no malfunction is detected in the discharge switch $S_2$ in the cell balance circuit of the electric cell $B_2$, a voltage $V_2$ detected at the voltage detection and control circuit 2 when turning the discharge switch $S_2$ on and activating a cell balance function can be obtained by the following formula (1) (Note that, the other switches except the discharge switch $S_2$ are off).

$$V_2 = B_2 \times R_S / (2R + R_S) \cdots (1)$$

Note that, R is a resistance of the resistors $R_1$, $R_2$, ..., $R_n$, $R_{n+1}$, and $R_S$ is an on-resistance that the discharge switch has when the discharge switch is on.

(Disconnect Detection of Voltage Detection Lines)

When the voltage detection line $I_2$ is disconnected, a voltage $V_{2s}$ detected at the voltage detection and control circuit 2 when turning the discharge switch $S_2$ on and activating the cell balance function can be obtained by the following formula (2).

$$V_{2S} = (B_1 + B_2) \times R_S / (2R + R_S + R_{1IN}) \cdots (2)$$

Note that, $R_{1IN}$ is an input impedance between input terminals to which the discharge switch $S_1$ of the voltage detection and control circuit 2 is connected, and $V_{2S}$ is a voltage value applied between input terminals of the voltage detection and control circuit 2 to which the discharge switch $S_2$ is connected when the discharge switch $S_2$ is on. In this case, the input impedance of the voltage detection and control circuit 2 is substantially high, i.e. $R_{1IN} \gg 2R + R_S$. Thus, it results in $V_2 \gg V_{2S}$.

According to this relationship, a disconnect determination voltage $V_{SL}$ is arranged between the voltage $V_Z$ and the voltage $V_{2S}$. Then, by detecting the voltage when turning the discharge switch $S_2$ on and activating the cell balance function, and by determining whether the detected voltage value exceeds the disconnect determination voltage $V_{SL}$ or not, the disconnection of the voltage detection line $I_2$ can be determined.

(Malfunction Detection of Cell Balance Circuits)

When the voltage detection line $I_2$ is not disconnected and no malfunction is detected in the discharge switch

$S_2$, the voltage $V_2$ when turning the discharge switch $S_2$ on and activating the cell balance function can be obtained by the above-mentioned formula (1). In this case, the discharge switch $S_1$ is off.

While, when a malfunction is detected, e.g. when the discharge switch $S_2$ in the cell balance circuit is not turned on properly, a voltage $V_{2E}$ detected at the voltage detection and control circuit 2 can be obtained by the following formula (3).

$$V_{2E} = B_2 \times R_{SE} / (2R + R_{SE}) \cdots (3)$$

Note that, $R_{SE}$ is an on-resistance that the discharge switch has when the cell balance circuit is detected as a malfunction, e.g. when the discharge switch $S_2$ is not turned on properly. In this case, $R_{SE} \gg R_S$, thus, it results in $V_{2E} > V_2$. When $R_{SE}$ is substantially high, the voltage $V_{2E}$ is approximately the same voltage detected at the voltage detection and control circuit 2 when the discharge switch $S_2$ is off.

According to this relationship, a discharge malfunction determination voltage $V_{SH}$ is arranged between the voltage $V_2$ and the voltage $V_{2E}$. Then, by detecting the voltage when turning the discharge switch $S_2$ on and activating the cell balance function, and by determining whether the detected voltage value exceeds the discharge malfunction determination voltage $V_{SH}$ or not, the malfunction of the cell balance circuit can be detected.

Namely, the relationship between the discharge malfunction determination voltage $V_{SH}$ and the disconnect determination voltage $V_{SL}$ is arranged so as to be,

$$V_{2E} > V_{SH} > V_2 > V_{SL} > V_{2S},$$

with respect to the respective obtained voltages $V_2$, $V_{2S}$ and $V_{2E}$.

The discharge malfunction determination voltage $V_{SH}$ and the disconnect determination voltage $V_{SL}$ can be obtained by the following formulae (4) and (5), for instance.

$$V_{SH} = 2 \times (\text{cell over-charge voltage value}) \times R_S / (2R + R_S) \cdots (4)$$

$$V_{SL} = 1/2 \times (\text{cell over-discharge voltage value}) \times R_S / (2R + R_S) \cdots (5)$$

Then, by performing calculations using the formulae (4) and (5) with respect to each of the discharge switches $S_1$, $S_2$, ..., $S_n$, it is possible to detect the disconnection of the respective voltage detection lines $l_1$, $l_2$, ..., $l_n$, $l_{n+1}$, and detect the malfunction of the respective cell balance circuits.

Next, the following are descriptions of the detection of the voltage detection line disconnection and the cell balance circuit nonconformity, and the detection of the over-charge and over-discharge as an embodiment of the method of making a malfunction detection signal of the present invention by use of the flow chart in Fig. 2.

Before the process of the flow chart of the present embodiment, all the electric cells $B_1$, $B_2$, ..., $B_n$ are assumed to be fully charged in advance.

First, the voltage $V_1$ between the terminals of the first discharge switch $S_1$ is detected when the discharge switch $S_1$ of the discharge switches $S_1$, $S_2$, ..., $S_n$ arranged in series is off ("Detect $V_1$ when $S_1$ is off": Step $S_1$).

Next, it is determined a criterion whether the detected voltage $V_1$ between the terminals is equivalent to the charged voltage of the electric cell $B_1$ ("Cell $B_1$ is conformity?": Step S2). When the both values are not equivalent (NO), the electric cell $B_1$ is determined as a "malfunction", and an "alert" of the "malfunction" is sent to an upper system ("Alert upper system": Step S3). Note that, the upper system is a system to control an entire hybrid vehicle including the battery device A, for instance, and to be placed in a rank higher than a battery device control level. The upper system determines the battery device A as a "defective" due to the "alert". While, when the both voltage values are equivalent (YES), the electric cell $B_1$ is determined as a "conformity", followed by Step S4.

Then, the discharge switch $S_1$ is turned on so as to detect the voltage $V_1$ between the terminals of the discharge switch $S_1$. The detected voltage is stacked (overwritten) as a stack voltage $V_{S1}$, in a memory not shown in the figure detect $V_1$ when $S_1$ is on": Step S4).

Thus, a series of steps for the discharge switch $S_1$ (Step S1 to Step S4) is finished. Then, a series of steps for the discharge switch $S_3$ is immediately started. The series of steps for the discharge switch $S_3$ is similar to the series of steps for the discharge switch $S_1$. Similarly, the respective series of steps for the odd-numbered discharge switches $S_5$, $S_7$, ... are performed in order.

Then, similar to the series of steps for the odd-numbered discharge switches, the respective series of steps for the even-numbered discharge switches $S_2$, $S_4$, $S_6$, $S_8$, ... (similar to Step S1 to Step S4) are performed in order.

Thus, the all series of steps for the discharge switches $S_1$, $S_2$, $S_3$, ... $S_{n-1}$ except the last discharge switch $S_n$ is finished.

As a result, when all the electric cells $B_1$, $B_2$, $B_3$, $B_4$, ..., $B_{n-1}$ are determined as a conformity", the stack voltages $V_{S2}$, $V_{S3}$, ..., $V_{Sn-1}$ are equivalent to the voltages $V_2$, $V_3$, ..., $v_{n-1}$ between the terminals of the discharge switches $S_2$, $S_3$, ..., $S_{n-1}$ when the respective discharge switches $S_2$, $S_3$, ..., $S_{n-1}$ are off.

Then, the voltage $V_n$ between the terminals of the discharge switch $S_n$ is detected when the last discharge switch $S_n$ is off ("Detect $V_n$ when $S_n$ is off": Step S5).

Next, it is determined a criterion whether the detected voltage $V_n$ between the terminals is equivalent to the fully charged voltage of the electric cell $B_n$ ("Cell $B_n$ is conformity: Step S6). When the both values are not equivalent (NO), the electric cell $B_n$ is determined as a "malfunction", and an "alert" of the "malfunction" is sent to the upper system ("Alert upper system": Step S7). The upper system determines the battery device A as a "defective" due to the "alert". While, when the both voltage values are equivalent (YES), the electric cell $B_n$ is determined as a "conformity", followed by Step S8.

Then, the discharge switch $S_n$ is turned on so as to detect the voltage $V_n$ between the terminals of the discharge switch $S_n$. The detected voltage is stacked as a stack voltage $V_{Sn}$ in a memory not shown in the figure (Detect $V_n$ when $S_n$ is on": Step S8).

As a result, the following steps are performed only when all the electric cells $B_1$, $B_2$, $B_3$, $B_4$, ..., $B_n$ are determined as a "conformity".

Next, it is determined criteria whether all the stack voltages $V_{S1}$, $V_{S2}$, ..., $V_{Sn}$ are the predetermined discharge malfunction determination voltage $V_{SH}$ or more ("$V_{S1}$ to $V_{Sn}$ are $V_{SH}$ or more?": Step S9). The predetermined discharge malfunction determination voltage $V_{SH}$ is configured to be larger than the fully charged voltage $V_1$ with a predetermined value. As a result of the determination of the criteria when any of the stack voltages $V_{S1}$, $V_{S2}$, ..., $V_{Sn}$ are the predetermined discharge malfunction determination voltage $V_{SH}$ or more, the corresponding electric cells are determined to be in an over-charge state (YES), and the upper system is notified of a cell balance circuit nonconformity" ("Notify upper system of cell balance circuit nonconformity": Step S10). While, when all the stack voltages $V_{S1}$, $V_{S2}$, ..., $V_{Sn}$ are less than the predetermined discharge malfunction determination voltage $V_{SH}$ (NO), the next Step S11 is performed.

Then, it is determined a criterion whether all the stack voltages $V_{S1}$, $V_{S2}$, ..., $V_{Sn}$ are the predetermined disconnect determination voltage $V_{SL}$ or less ("$V_{S1}$ to $V_{Sn}$ are $V_{SL}$ or less?": Step S11). The disconnect determination voltage $V_{SL}$ is configured to be smaller than the discharge voltage of the battery device A with a predetermined value. As a result of the determination of the criterion, when any of the stack voltages $V_{S1}$, $V_{S2}$, ..., $V_{Sn}$ are the predetermined disconnect determination voltage $V_{SL}$ or less, the corresponding electric cells are determined to be in an over-discharge state (YES), and the upper system is notified of a voltage detection line disconnection ("Notify upper system of voltage detection line disconnection": Step S12). While, when all the stack voltages $V_{S1}$, $V_{S2}$, $V_{S3}$, ..., $V_{Sn}$ are more than the predetermined disconnect determination voltage $V_{SL}$ (NO), the above-described series of steps according to the present embodiment is completed.

As described above, according to the method of making the malfunction detection signal of the embodiment of the present invention, when any voltage detection line disconnection and cell balance nonconformity is detected in at least one of the electric cells, the battery device itself is determined as a defective due to a battery device malfunction. Even if such a malfunction is not detected, the battery device is determined as a defective due to a battery device malfunction when at least one electric cell is determined to be in an over-charge or over-discharge state. Thus, due to the method of making the malfunction detection signal according to the present invention, it is possible to double-check all the electric cells so as to strengthen quality control of the battery device. Accordingly, it is possible to maintain high performance of the battery device for a long period. In addition, it is possible to provide the battery device while achieving high reliability by users.

**Claims**

1. A battery device comprising:

electric cells electrically-connected in series;

resistors connected to respective electrodes of the electric cells;

discharge circuits for discharging voltages between the respective electrodes of the electric cells via the resistors; and

a detection and control circuit for detecting the voltages between the respective electrodes of the electric cells via the resistors, and performing discharge control by closing a set discharge circuit of the discharge circuits, wherein

a detection voltage obtained when the set discharge circuit is closed and a corresponding electric cell is in a normal condition is defined as V,

a detection voltage obtained when the set discharge circuit is closed and the set discharge circuit is in a disconnect state is defined as $V_S$,

a detection voltage obtained when the set discharge circuit is not closed and the set discharge circuit is not in a disconnect state is defined as $V_E$,

a disconnect determination voltage arranged between the detection voltage V in the normal condition and the detection voltage $V_S$ in the disconnect state, and defined as a criterion voltage to determine the set discharge circuit to be in a disconnect state with respect to a voltage detected when the set discharge circuit is closed is defined as $V_{SL}$,

a discharge malfunction determination voltage arranged between the detection voltage V in the normal condition and the detection voltage $V_E$ with the certain discharge circuit not closed, and defined as a criterion voltage to determine the set discharge circuit not to be in a disconnect state with respect to a voltage detected when the set discharge circuit is not closed is defined as $V_{SH}$,

the detection and control circuit arranges a relationship between the voltages $V_{SL}$, and $V_{SH}$ so as to be

$$V_E > V_{SH} > V > V_{SL} > V_S$$

with respect to the respective voltages V, $V_S$ and $V_E$, and

a corresponding electric cell is determined as a malfunction when at least one of the voltages detected in the detection and control circuit with the discharge circuits closed is determined to be the discharge malfunction, determination voltage $V_{SH}$ or more, or the disconnect determination voltage $V_{SL}$ or less.

2. A method of making a malfunction detection signal detecting a malfunction of the battery device according to claim 1, the method comprising:

a first step of determining whether voltages between the both electrodes of the respective electric cells when not closing the discharge circuits meet a predetermined voltage so as to determine a criterion whether all of the electric cells are conformity;

a second step of detecting and recording voltages of all of the electric cells with the discharge circuits closed when the voltages between the respective electrodes of all of the electric cells are conformity as a result of a determination in the first step;

a third step of determining whether at least one of the voltages detected in the second step is the discharge malfunction determination voltage $V_{SH}$ or more;

a fourth step of determining a corresponding electric cell to be in a discharge circuit malfunction state when at least one of the voltages is determined to be the discharge malfunction determination voltage $V_{SH}$ or more as a result of a determination in the third step;

a fifth step of determining whether at least one voltage is the disconnect determination voltage $V_{SL}$ or less when all of the voltages are determined to be less than the discharge malfunction determination voltage $V_{SH}$ as a result of the determination in the third step; and

a sixth step of determining a corresponding discharge circuit to be in a disconnect state when at least one of the voltages detected in the second step is determined to be the disconnect determination voltage $V_{SL}$ or less as a result of a determination in the fifth step, wherein

a corresponding electric cell is determined as a malfunction when the at least one of the voltages detected in the second step is determined to be the discharge malfunction determination voltage $V_{SH}$ or more, or the disconnect determination voltage $V_{SL}$ or less.

# FIG. 1

# FIG. 2

```
                    START

        DETECT V₁ WHEN S₁ IS OFF  ──── S1

                                      S2
              CELL B₁ IS            NO
             CONFORMITY ? ────────────────
                                           │
           YES                             │
                                   ALERT UPPER SYSTEM ──── S3

         DETECT V₁ WHEN S₁ IS ON  ──── S4

        DETECT Vₙ WHEN Sₙ IS OFF  ──── S5

                                      S6
              CELL Bₙ IS            NO
             CONFORMITY ? ────────────────
                                           │
           YES                             │
                                   ALERT UPPER SYSTEM ──── S7

         DETECT Vₙ WHEN Sₙ IS ON  ──── S8

                                      S9
            V_{S1} TO V_{Sn} ARE    YES
            V_{SH} OR MORE ? ────────────
                                           │
           NO                    NOTIFY UPPER SYSTEM
                                 OF CELL BALANCE    ──── S10
                                 CIRCUIT ANOMALY
                                      S11
            V_{S1} TO V_{Sn} ARE    YES
            V_{SL} OR LESS ? ────────────
                                           │
           NO                    NOTIFY UPPER SYSTEM
                                 OF VOLTAGE DETECTION ──── S12
                                 LINE DISCONNECTION

                    END
```

Europäisches
Patentamt

European
Patent Office

Office européen
des brevets

**EUROPEAN SEARCH REPORT**

**Application Number**

EP 09 17 2459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 061254 A (SANYO ELECTRIC CO) 28 February 2003 (2003-02-28) * figure 1 * * paragraphs [0018] - [0028] * ----- | 1 | INV. H01M10/48 |
| A | EP 1 662 632 A1 (SAMSUNG SDI CO LTD [KR]) 31 May 2006 (2006-05-31) * paragraph [0018] * ----- | 1-2 | |
| A | JP 10 021965 A (NISSAN MOTOR) 23 January 1998 (1998-01-23) * the whole document * ----- | 1-2 | |
| A | US 2008/012570 A1 (BUCUR CONSTANTIN [US]) 17 January 2008 (2008-01-17) * the whole document * ----- | 1-2 | |

**TECHNICAL FIELDS SEARCHED (IPC)**

H01M

The present search report has been drawn up for all claims

| Place of search | Date of completion of the search | Examiner |
|---|---|---|
| Munich | 16 December 2009 | Veit, Claudia |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 09 17 2459

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2009

| Patent document cited in search report | | Publication date | Patent family member(s) | | Publication date |
|---|---|---|---|---|---|
| JP 2003061254 | A | 28-02-2003 | JP 3545367 | B2 | 21-07-2004 |
| EP 1662632 | A1 | 31-05-2006 | CN 1790857 | A | 21-06-2006 |
| | | | JP 4171742 | B2 | 29-10-2008 |
| | | | JP 2006158195 | A | 15-06-2006 |
| | | | KR 20060059680 | A | 02-06-2006 |
| | | | US 2006139008 | A1 | 29-06-2006 |
| JP 10021965 | A | 23-01-1998 | JP 3711639 | B2 | 02-11-2005 |
| US 2008012570 | A1 | 17-01-2008 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007085847 A